# DEMANDE DE BREVET EUROPEEN

(11) **EP 0 569 269 A1**
(43) Date de publication de la demande: **10.11.1993**
(21) Numéro de dépôt: 93401097.6
(22) Date de dépôt: 27.04.1993
(51) Int. Cl.: B60R 25/02

(54) **Ensemble de colonne de direction à antivol, notamment pour véhicule automobile**

(30) Priorité: 04.05.1992 FR 9205463
(71) Demandeur: ECIA - EQUIPEMENTS ET COMPOSANTS POUR L'INDUSTRIE AUTOMOBILE, F-25400 Audincourt (FR)
(72) Inventeur: Courvoisier, Patrick, F-25600 Vieux Charmont (FR)
(74) Mandataire: Habasque, Etienne Joel Jean-François

(57) **Abrégé**

Cet ensemble comportant un corps muni d'un mécanisme à pène d'antivol, et dans lequel est disposé un arbre (18) dont une extrémité porte un volant et dont l'autre extrémité est reliée au mécanisme de direction, et autour duquel est disposé un manchon (17) comportant des moyens de verrouillage (19) adaptés pour coopérer avec le pène en position active pour bloquer l'arbre en rotation par rapport au corps et des moyens (20) d'accouplement à friction interposés entre ce manchon et l'arbre pour autoriser une rotation de l'arbre dans le manchon au-delà d'un couple limite appliqué sur l'arbre, est caractérisé en ce que le manchon (17) présente un évidement axial étagé dont une portion (17a), s'étendant en regard des moyens de verrouillage (19), est adaptée pour coopérer avec l'arbre (18) pour le guidage du manchon et la reprise d'effort entre les moyens de verrouillage et l'arbre et dont une autre portion (17b), est adaptée pour recevoir les moyens d'accouplement (20).

## Description

La présente invention concerne un ensemble de colonne de direction à antivol notamment pour véhicule automobile.

On connait déjà dans l'état de la technique, par exemple du document FR-A-1 240 060 au nom de NEIMAN, un dispositif antivol, notamment pour véhicule automobile, moto et similaire, qui comporte par exemple un corps de colonne muni d'un mécanisme à pène d'antivol déplaçable entre une position escamotée et une position active. Un arbre de direction est disposé dans ce corps de colonne, l'une des extrémités de cet arbre étant adaptée pour porter le volant de direction du véhicule tandis que l'autre extrémité de celui-ci est reliée au reste du mécanisme de direction du véhicule.

Un manchon de verrouillage est disposé autour de cet arbre et est par exemple soudé ou vissé sur celui-ci.

Ce manchon comporte une lumière de verrouillage dans laquelle s'engage le pène du mécanisme d'antivol, en position active, pour bloquer l'arbre en rotation par rapport au corps de colonne.

On conçoit donc qu'en position escamotée, le pène du mécanisme d'antivol n'est pas engagé dans la lumière de verrouillage du manchon, de sorte que l'arbre peut tourner librement dans le corps de colonne pour assurer la commande de la direction du véhicule.

Lorsque l'utilisateur retire par exemple la clé du mécanisme à pène d'antivol, celui-ci est relâché et s'engage dans la lumière du manchon, pour verrouiller l'arbre en position par rapport au corps et empêcher toute conduite du véhicule.

Cependant, on s'est aperçu que ces ensembles de colonne de direction classiques dans lesquels le pène du mécanisme d'antivol s'engage en position active dans une lumière d'un manchon fixé sur l'arbre, pouvaient facilement être forcés, ce qui se traduisait par des dégradations relativement importantes de la colonne de direction lors de tentatives de vol et une réduction notable de la sécurité de fonctionnement du véhicule.

Pour résoudre ces problèmes de dégradations de l'ensemble de colonne, il a alors été proposé d'interposer entre le manchon et l'arbre de direction, des moyens d'accouplement à friction autorisant une rotation freinée de l'arbre de direction dans le manchon au-delà d'un couple limite appliqué sur l'arbre, afin de limiter la dégradation de l'ensemble de colonne c'est à dire de l'arbre, du manchon et/ou du pène, lors des tentatives de vol.

Ainsi, si le couple appliqué sur le volant, par exemple par un voleur, lors d'une tentative de vol, est supérieur à un seuil déterminé, l'arbre de direction tourne dans le manchon, cette rotation étant freinée par les moyens d'accouplement à friction interposés entre ce manchon et cet arbre, afin d'éviter toute dégradation trop importante de cet ensemble de colonne, tout en empêchant une conduite normale du véhicule.

On connait par exemple dans l'état de la technique des ensembles de colonne de direction de ce type, dans lesquels le manchon comporte au moins une lumière de verrouillage et des bagues ondulées d'accouplement à friction sont disposées aux extrémités de ce manchon et montées sous contrainte entre le manchon et l'arbre.

Cependant, cette structure présente également un certain nombre d'inconvénients, car le guidage du manchon sur l'arbre et la reprise des efforts entre ce manchon et cet arbre se font à travers ces bagues, ce qui pose un certain nombre de problèmes de maintien en position du manchon.

En effet, lorsqu'un couple important est appliqué entre ce manchon et le pène, le manchon a tendance à se déplacer du fait de la déformation de l'une et/ou de l'autre bagues de friction.

Il peut alors arriver. que le pène se dégage de la lumière de verrouillage de ce manchon et que la fonction d'antivol ne soit plus complètement assurée. De plus, les bagues de friction se détériorent.

Le but de l'invention est donc de résoudre ces problèmes en proposant un ensemble de colonne de direction du type mentionné précédemment, qui soit simple, fiable et dans lequel le maintien en position du manchon soit optimisé.

A cet effet, l'invention a pour objet un ensemble de colonne de direction à antivol notamment pour véhicule automobile, du type comportant un corps de colonne muni d'un mécanisme à pène d'antivol, déplaçable entre une position escamotée et une position active et dans lequel est disposé un arbre de direction, dont une extrémité porte un volant de direction et dont l'autre extrémité est reliée au reste du mécanisme de direction du véhicule, et autour duquel est disposé un manchon d'antivol comportant des moyens de verrouillage adaptés pour coopérer avec le pène du mécanisme d'antivol en position active, pour bloquer l'arbre en rotation par rapport au corps de colonne et des moyens d'accouplement à friction interposés entre ce manchon et l'arbre pour autoriser une rotation freinée de l'arbre par rapport au manchon, au-delà d'un couple limite appliqué sur l'arbre afin de limiter la dégradation de l'arbre, du manchon et/ou du pène lors de tentatives de vol, caractérisé en ce que le manchon présente un évidement axial étagé dont une première portion, s'étendant en regard des moyens de verrouillage, est adaptée pour coopérer avec l'arbre pour le guidage du manchon sur l'arbre et la reprise d'effort entre les moyens de verrouillage de celui-ci et l'arbre et dont une seconde portion, de plus grand diamètre que la première, est adaptée pour recevoir les moyens d'accouplement à friction et en ce que les moyens de verrouillage comprennent des cannelures ménagées dans la surface extérieure du manchon au niveau de la première portion d'évidement de celui-ci, et débouchant à l'extrémité correspondante du manchon.

Avantageusement, les moyens d'accouplement à friction comprennent au moins une bague de friction montée sous contrainte entre l'arbre et la paroi du manchon délimitant la seconde portion d'évidement de celui-ci.

L'invention sera mieux comprise à l'aide de la description qui va suivre, donnée uniquement à titre d'exemple et faite en se référant aux dessins annexés, sur lesquels :
- la Fig.1 représente une vue en coupe d'un premier mode de réalisation d'un ensemble de colonne de direction de l'état de la technique;
- la Fig.2 représente une vue partielle en coupe d'un second mode de réalisation d'un ensemble de colonne de direction de l'état de la technique; et
- les Fig.3 et 4 représentent des vues partielles en coupe de deux modes de réalisation d'un ensemble de colonne de direction selon l'invention.

Ainsi qu'on peut le voir sur la Fig.l, un ensemble de colonne de direction à antivol notamment pour véhicule automobile, de l'état de la technique, comporte un corps de colonne désigné par la référence générale 1 sur cette figure. Ce corps est muni d'un mécanisme 2 à pène 3 d'antivol, déplaçable entre une position escamotée et une position active.

Un arbre de direction 4 est disposé dans le corps de colonne, l'une des extrémités de cet arbre étant adaptée pour porter un volant de direction et l'autre étant reliée au reste du mécanisme de direction du véhicule.

Un manchon d'antivol désigné par la référence générale 5 sur cette figure est disposé autour de l'arbre et est fixé sur celui-ci par exemple par soudage. Ce manchon comporte des moyens de verrouillage, constitués dans le mode de réalisation représenté par une lumière 6, adaptés pour coopérer avec le pène du mécanisme d'antivol en position active, pour bloquer l'arbre en rotation par rapport au corps de colonne.

On conçoit donc que selon la position du pène, celui-ci s'engage ou non dans la lumière 6 du manchon 5, pour bloquer l'arbre en rotation dans le corps et assurer la fonction d'antivol ou non.

Ainsi qu'on l'a indiqué précédemment, ces ensembles présentent un certain nombre d'inconvénients au niveau des dégradations subies lors des tentatives de vol.

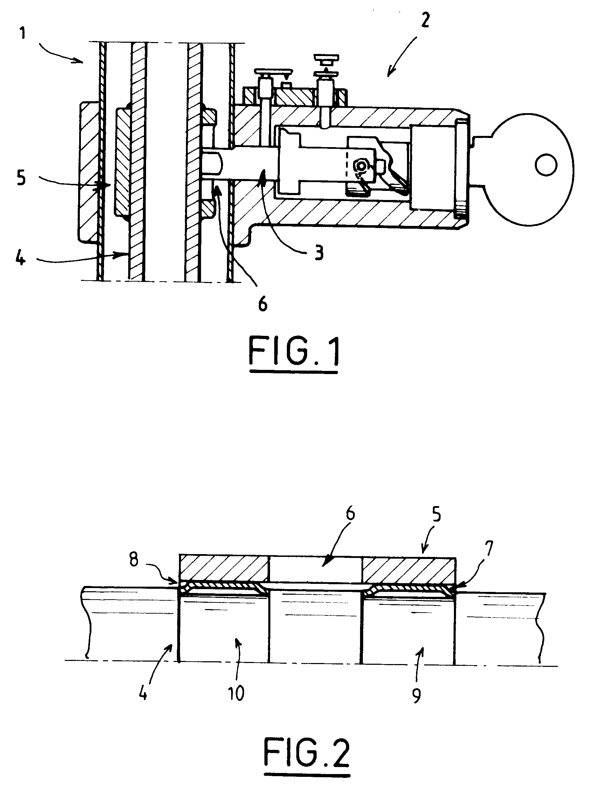

D'autres ensembles de colonne de direction ont alors été développés pour résoudre ces problèmes, comme celui représenté sur la Fig.2.

Dans le mode de réalisation représenté sur cette Fig.2, le manchon de verrouillage 5 comportant la lumière de verrouillage 6 adaptée pour coopérer avec le pène, est accouplé à l'arbre de direction 4 par l'intermédiaire de moyens d'accouplement à friction, interposés entre celui-ci et l'arbre pour autoriser une rotation freinée de l'arbre par rapport au manchon, au-delà d'un couple limite appliqué sur l'arbre, afin de limiter les dégradations.

Dans ces ensembles, ces moyens d'accouplement à friction sont constitués par exemple par des bagues de friction ondulées disposées aux extrémités du manchon et désignées par les références générales 7 et 8 sur cette figure.

Ces bagues sont avantageusement montées sous contrainte entre le manchon 5 et l'arbre 4 et sont disposées dans des gorges 9 et 10 de celui-ci.

On a indiqué précédemment que ce type de montage présentait également un certain nombre d'inconvénients, au niveau du maintien en position du manchon par rappport à l'arbre, de la reprise d'effort entre ce manchon et cet arbre et des dégradations subies par les bagues, lors des tentatives de vol.

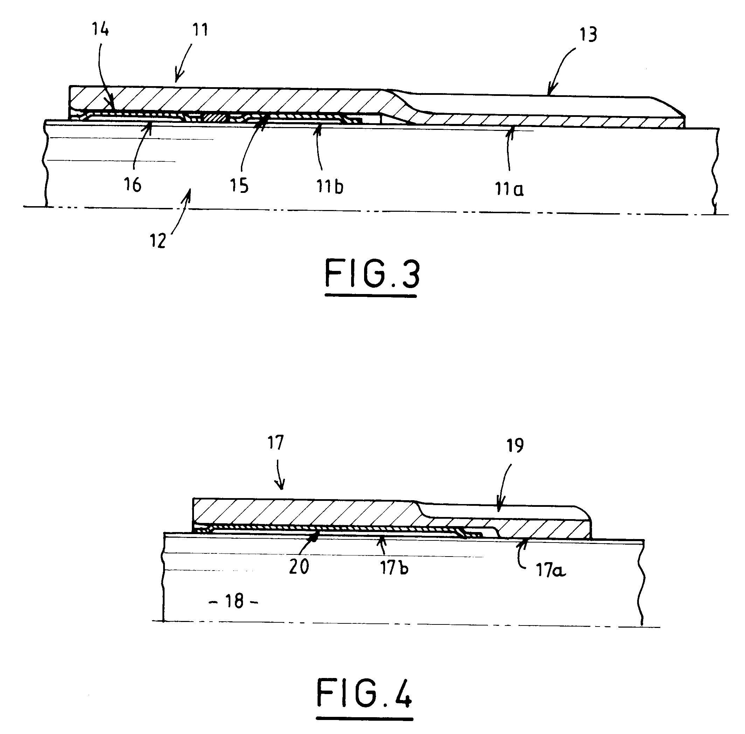

Sur la Fig.3, on a représenté une partie d'un premier mode de réalisation d'un ensemble de colonne selon l'invention, les autres organes de cet ensemble étant analogues à ceux représentés sur les Fig.1 et 2.

Sur cette figure, le manchon d'antivol est désigné par la référence générale 11 et l'arbre de direction par la référence générale 12.

Ce manchon comporte toujours des moyens de verrouillage adaptés pour coopérer avec le pène du mécanisme d'antivol en position active de celui-ci, pour bloquer ce manchon en rotation par rapport au corps de colonne. Dans l'exemple de réalisation représenté, ces moyens de verrouillage sont formés par des cannelures axiales 13 ménagées dans la surface extérieure du manchon à proximité de l'une des extrémités de celui-ci.

Par ailleurs, des moyens d'accouplement à friction désignés par la référence générale 14 sont également interposés entre ce manchon et l'arbre pour autoriser une rotation freinée de l'arbre par rapport au manchon, au-delà d'un couple limite appliqué sur cet arbre, afin de limiter les dégradations de cet ensemble.

Selon l'invention, le manchon 11 présente un évidement axial étagé dont une première portion 11a, s'étendant en regard des moyens de verrouillage 13, est adaptée pour coopérer avec l'arbre 12 pour le guidage du manchon 11 sur l'arbre et la reprise des efforts entre les moyens de verrouillage 13 de celui-ci et l'arbre. Par ailleurs, une seconde portion 11b de ce manchon, de plus grand diamètre que la première, est adaptée pour recevoir les moyens 14 d'accouplement à friction constitués par exemple par deux bagues ondulées de friction 15 et 16.

On conçoit donc que la structure de ce manchon permet de dissocier les fonctions d'accouplement à friction et de reprise d'effort et de guidage du manchon sur l'arbre.

Ce manchon est donc parfaitement maintenu sur l'arbre et le pène ne peut plus se dégager des moyens de verrouillage. Par ailleurs, la transmission des efforts entre le pène, les moyens de verrouillage du manchon, le manchon et l'arbre, se fait directement par la première portion 11a du manchon en appui sur l'arbre, contrairement aux ensembles de l'état de la technique, dans lesquels cette transmission se faisait à travers les bagues de friction.

Sur la Fig.4, on a représenté un autre mode de réalisation dans lequel le manchon de verrouillage est désigné par la référence générale 17. Ce manchon est disposé sur un arbre désigné par la référence générale 18.

Ce manchon comporte toujours des moyens de verrouillage adaptés pour coopérer avec le pène en position active, constitués par exemple par des cannelures axiales et désignés par la référence générale 19.

Ce manchon comporte également un évidement central étagé comportant une première portion 17a, de guidage et de reprise d'effort et une seconde portion, de plus grand diamètre, 17b, de réception d'au moins une bague de friction 20.

Cette seconde portion 17b du manchon chevauche, dans ce mode de réalisation, la zone de celui-ci dans laquelle sont ménagés les moyens de verrouillage et la première portion 17a de celui-ci constitue alors également dans ce cas, une portion de renforcement de cette extrémité du manchon, permettant d'éviter l'éclatement de celui-ci lors du montage à force de cet ensemble, pour la mise sous contrainte de la bague 20 entre l'arbre et la paroi du manchon délimitant la seconde portion d'évidement de celui-ci.

On notera que dans les modes de réalisation représentés sur ces figures 3 et 4, les moyens de verrouillage, constitués par les cannelures 13 et 19, débouchent à l'une des extrémités de ce manchon et que la première portion d'évidement de celui-ci est ménagée en regard d'au moins une partie de ces cannelures.

Par ailleurs, les bagues de friction sont disposées sur une portion lisse de l'arbre, la ou les bagues étant maintenues en position lors du montage, par une surface de butée escamotable de l'outil de montage, et le manchon peut être réalisé très facilement par exemple par extrusion.

Bien entendu, d'autres modes de réalisation des moyens de verrouillage, comme par exemple des lumières, de même que d'autres moyens d'accouplement à friction, peuvent être envisagés.

## Revendications

1. Ensemble de colonne de direction à antivol notamment pour véhicule automobile, du type comportant un corps de colonne (1) muni d'un mécanisme (2) à pène (3) d'antivol, déplaçable entre une position escamotée et une position active et dans lequel est disposé un arbre de direction (12;18), dont une extrémité porte un volant de direction et dont l'autre extrémité est reliée au reste du mécanisme de direction du véhicule, et autour duquel est disposé un manchon (11;17) d'antivol comportant des moyens de verrouillage (13;19) adaptés pour coopérer avec le pène du mécanisme d'antivol en position active, pour bloquer l'arbre en rotation par rapport au corps de colonne et des moyens (15,16;20) d'accouplement à friction interposés entre ce manchon et l'arbre pour autoriser une rotation freinée de l'arbre par rapport au manchon, au-delà d'un couple limite appliqué sur l'arbre afin de limiter la dégradation de l'arbre, du manchon et/ou du pène lors de tentatives de vol, caractérisé en ce que le manchon (11;17) présente un évidement axial étagé dont une première portion (11a;17a), s'étendant en regard des moyens de verrouillage (13;19), est adaptée pour coopérer avec l'arbre (12;18) pour le guidage du manchon sur l'arbre et la reprise d'effort entre les moyens de verrouillage de celui-ci et l'arbre et dont une seconde portion (11b;17b), de plus grand diamètre que la première, est adaptée pour recevoir les moyens d'accouplement à friction (15,16; 20), et en ce que les moyens de verrouillage comprennent des cannelures (13;19) ménagées dans la surface extérieure du manchon (11;17) au niveau de la première portion d'évidement (11a;17a) de celui-ci, et débouchant à l'extrémité correspondante du manchon.

2. Ensemble selon la revendication 1, caractérisé en ce que les moyens d'accouplement à friction comportent au moins une bague (15,16;20) de friction, montée sous contrainte entre l'arbre et la paroi du manchon délimitant la seconde portion d'évidement (11b; 17b) de celui-ci.

3. Ensemble selon la revendication 1 ou 2, caractérisé en ce que les moyens d'accouplement à friction sont interposés entre le manchon (11;17) et une portion lisse de l'arbre (12;18).

4. Ensemble selon l'une quelconque des revendications précédentes, caractérisé en ce que la seconde portion d'évidement (11b;17b) du manchon chevauche la zone de celui-ci dans laquelle sont ménagés les moyens de verrouillage (13;19).
